# DEMANDE DE BREVET EUROPEEN

(11) **EP 1 491 092 A2**
(43) Date de publication de la demande: **29.12.2004**
(21) Numéro de dépôt: 04300038.9
(22) Date de dépôt: 22.06.2000
(51) Int. Cl.: A01N 57/20

(54) **Procédé phytosanitaire mettant en oeuvre une composition comprenant au moins un principe actif hydrosoluble et au moins une huile modifiée**

(30) Priorité: 23.06.1999 FR 9908010
(62) Demande divisionnaire de: 00945986.8
(71) Demandeur: SOCIETE D'EXPLOITATION DE PRODUITS POUR LES INDUSTRIES CHIMIQUES, S.E.P.P.I.C., 75321 Paris Cédex 07 (FR); Institut National de la Recherche Agronomique (INRA), 75338 Paris Cédex 07 (FR)
(72) Inventeur: Millius, Alain, 06000 Nice (FR); Gauvrit, Christian, 21000 Dijon (FR); Muller, Thomas, 21110 Izier (FR); Brancq, Bernard, 78150 Le Chesnay (FR)
(74) Mandataire: Conan, Philippe Claude

(57) **Abrégé**

Procédé de traitement phytosanitaire par absorption foliaire, caractérisé en ce qu'il met en oeuvre une composition comprenant au moins un principe actif phytosanitaire hydrosoluble et au moins une huile modifiée, ladite composition comprenant au moins un principe actif phytosanitaire, au moins une huile végétale et/ou un ester d'huile végétale éthoxylée.

## Description

L'invention a pour objet un procédé de traitement phytosanitaire par absorption foliaire, mettant en oeuvre une association entre un principe actif et une huile modifiée et une nouvelle association pour la mise en oeuvre dudit procédé.

La pénétration d'un principe actif phytosanitaire dans une plante s'effectue, soit au niveau des feuilles, par absorption foliaire, soit au niveau des racines, par absorption radiculaire. L'absorption foliaire d'un principe actif est souvent difficile et très faible ; c'est notamment le cas pour le glyphosate qui doit être formulé avec des agents tensioactifs pour augmenter cette pénétration. Dans la demande internationale de brevet publiée sous le numéro WO 99/03343, les inventeurs proposent l'utilisation d'esters méthyliques d'acides gras éthoxylés, en combinaison avec des huiles végétales, en tant qu'agents mouillant, dispersant et émulsifiant, dans des concentrés herbicides, pour améliorer leur stabilité. Cependant, cette approche ne convient pas aux matières actives hydrosolubles car elle conduit à des émulsions.

Cependant, lorsque l'on traite avec des faibles quantités de glyphosate, c'est à dire inférieures ou égales à 306 grammes par hectare, comme c'est le cas dans la conduite des jachères ou pour le traitement de jeunes plantes annuelles, aucun des adjuvants actuellement mis en oeuvre avec ce principe actif, ne permet d'atteindre un taux d'absorption supérieur à 50% après 72 heures. Une période de pluie consécutive au traitement d'une culture risque donc d'induire une pollution du site, tandis qu'une période d'ensoleillement peut provoquer la dégradation du principe actif.

Les demanderesses se sont donc efforcées de mettre au point un procédé de traitement phytosanitaire par absorption foliaire, qui permette en peu de temps, une absorption élevée d'un principe actif hydrophile par la plante, tout en limitant les nuisances vis à vis des écosystèmes, et en utilisant des adjuvants beaucoup moins irritants, notamment pour les yeux, que ceux utilisés jusqu'à aujourd'hui.

L'invention a pour objet un procédé de traitement phytosanitaire par absorption foliaire, caractérisé en ce qu'il met en oeuvre une composition aqueuse comprenant au moins un principe actif phytosanitaire hydrosoluble et au moins une huile modifiée, choisie parmi les huiles éthoxylées ayant un nombre d'oxyde d'éthylène, appelé par la suite, indice d'OE, supérieur ou égal à 20 et inférieur ou égal à 60 et plus particulièrement supérieur ou égal à 30 et inférieur ou égal à 50 ou parmi les esters méthylique, éthylique, propyliques linéaire ou ramifié ou butyliques linéaire ou ramifiés, éthoxylés d'huiles, ayant un indice d'OE supérieur ou égal à 5 et inférieur ou égal à 50 et plus particulièrement supérieur ou égal à 6 et inférieur ou égal à 20.

Les huiles modifiées, utilisées dans le cadre de la présente invention, sont d'origine végétale ou d'origine animale. Parmi les huiles modifiées d'origine animale, que l'on met en oeuvre dans le procédé tel qu'il est défini précédemment, il y a par exemple, l'huile de suif modifiée. Parmi les huiles modifiées d'origine végétale que l'on met en oeuvre dans le procédé tel qu'il est défini précédemment, il y a par exemple, les huiles modifiées de tournesol, de lin, de soja, de maïs, d'arachide, de coprah, d'olive, de palme, de palme hydrogénée ou de colza.

Selon une variante particulière du procédé, tel que défini précédemment, l'huile modifiée comprise dans la composition mise en oeuvre, est un ester méthylique éthoxylé d'huile ayant un indice d'OE supérieur ou égal à 8 et inférieur ou égal à 15.

Selon une autre variante particulière du procédé, tel que défini précédemment, l'huile modifiée comprise dans la composition mise en oeuvre, est une huile éthoxylée ayant un indice d'OE supérieur ou égal à 30 et inférieur ou égal à 40.

L'invention a tout particulièrement pour objet, un procédé tel que défini précédemment, pour lequel l'huile modifiée comprise dans la composition mise en oeuvre, est de l'huile de colza modifiée ou de l'huile de tournesol modifiée.

Par au moins une huile modifiée, on indique que la composition mise en oeuvre dans le procédé objet de la présente invention, peut comprendre soit une seule, soit un mélange d'huiles modifiées ; dans ce dernier cas, il peut s'agir d'un mélange d'huiles modifiées de même origine ou d'un mélange d'huiles modifiées d'origines différentes ; il peut aussi s'agir d'un mélange d'une ou plusieurs huiles éthoxylées, telles qu'elles sont définies précédemment avec un ou plusieurs esters éthoxylés d'huiles, tels qu'ils sont définis précédemment.

Par traitement phytosanitaire, on entend dans le cadre de la présente invention, de préférence un traitement fongicide, insecticide ou herbicide et plus particulièrement, un traitement, dans lequel le principe actif est un composé de structure chimique dérivée du radical : -C(=O)-CH₂-N-CH₂-P(=O).

Comme exemple de composé de structure chimique dérivée dudit radical, il y a plus particulièrement le glyphosate ou N-(phosphonométhyl) glycine, sous forme de sel hydrosoluble, tel que par exemple les sels de monoisopropylamine ou de triméthylsulfonium.

Selon un autre aspect de la présente invention, celle-ci a pour objet une composition comprenant au moins un principe actif phytosanitaire hydrosoluble, et au moins une huile végétale modifiée, caractérisée en ce que ladite huile végétale modifiée est choisie parmi les huiles éthoxylées ayant un nombre d'oxyde d'éthylène, supérieur ou égal à 20 et inférieur ou égal à 60 et plus particulièrement supérieur ou égal à 30 et inférieur ou égal à 50 ou parmi les esters méthyl i-que, éthylique, propyliques linéaire ou ramifié ou butyliques linéaire ou ramifiés, éthoxylés d'huiles, ayant un indice d'OE supérieur ou égal à 5 et inférieur ou égal à 50 et plus particulièrement supérieur ou égal à 6 et inférieur ou égal à 20.

Pour améliorer sa tenue au froid, l'huile alkoxylée peut être préparée en incorporant, avant son alkoxylation de 1% à 10% en poids de glycérol. Ce problème est également résolu, en associant dans une même composition, une huile végétale alkoxylée telle que définie précédemment et un ester alkylique alkoxylé d'huile végétale, tel que défini précédemment, et plus particulièrement un ester méthylique, éthylique, propylique linéaire ou ramifié ou butylique linéaire ou ramifié, éthoxylé d'une huile végétale.

L'invention a plus particulièrement pour objet, une composition, telle que définie précédemment, dans laquelle le principe actif est un composé de structure chimique dérivée du radical -C(=O)-CH₂-N-CH₂-P(=O), et est tout particulièrement le glyphosate ou N-phosphonométhylglycine, sous forme de sel hydrosoluble, tel que, par exemple, les sels de monoisopropylamine, ou de triméthylsulfonium.

L'invention a tout particulièrement pour objet une composition telle que définie précédemment, dans laquelle, l'huile modifiée est un ester méthylique éthoxylé d'huile ayant un indice d'OE supérieur ou égal à 8 et inférieur ou égal à 15 et le principe actif phytosanitaire est le glyphosate sous forme de sel hydrosoluble.

L'invention a aussi tout particulièrement pour objet, une composition telle que définie précédemment, dans laquelle, l'huile modifiée est une huile éthoxylée ayant un indice d'OE supérieur ou égal à 30 et inférieur ou égal à 40 et le principe actif phytosanitaire est le glyphosate sous forme de sel hydrosoluble.

L'invention a enfin tout particulièrement pour objet, une composition telle que définie précédemment, dans laquelle l'huile modifiée est de l'huile de colza modifiée ou de l'huile de tournesol modifiée.

### EXEMPLE 1 : PREPARATION D'HUILES MODIFIEES

### A) Préparation d'esters méthyliques éthoxylés d'huile de colza

On obtient les esters méthyliques d'huile de colza éthoxylés, à partir de l'ester méthylique d'huile de colza, par réaction pendant 45 minutes environ, à 180°C et sous une pression de 4,5 bars, avec la quantité d'oxyde d'éthylène nécessaire à l'obtention du rapport molaire désiré, en présence d'un catalyseur basique, puis refroidissement et neutralisation du catalyseur.

### B) Préparation d'huiles de colza éthoxylées

En mettant en oeuvre le procédé d'éthoxylation décrit au paragraphe précédent, en présence de 2% en poids de glycérol, sur l'huile de colza, on obtient les huiles de colza éthoxylées.

### EXEMPLE 2 : ETUDE DE LA CAPACITE DES HUILES VEGETALES MODIFIEES A STIMULER LA PENETRATION FOLIAIRE D'UN PRINCIPE ACTIF PHYTOSANITAIRE.

### A) Compositions de glyphosate

On a comparé la pénétration dans les feuilles d'orge, (Hordeum vulgare L.) du glyphosate, qui est un herbicide hydrophile (log P < -3,4), dénommé N-(phosphonométhyl) glycine), suivant le mode opératoire suivant :

Le glyphosate marqué au carbone 14 est mis en solution dans l'eau (4,5 à 21 millimolaire ; 30 à 50 Bq ηL⁻¹), en l'absence d'huile végétale modifiée. En référence, la même quantité de glyphosate radioactif est incluse dans une préparation commerciale de glyphosate. Dix gouttes de 0,4 ηL sont appliquées sur la face adaxiale de la première feuille de l'orge. A O, 6, 24 et 72 heures, le produit non pénétré est lavé par 0,5 mL d'un mélange acétone/eau (1:1, V/V) et la radioactivité est mesurée par scintillation liquide. La radioactivité présente dans la feuille traitée et dans le reste de la plante est déterminée dans le dioxyde de carbone obtenu après combustion du tissu. Les résultats de trois séries d'essais indépendantes les unes des autres, exprimés en pourcentage de radioactivité ayant pénétré dans la plante, par rapport à la radioactivité déposée, sont exposés dans les tableaux suivants :

**Tableau 1**

| | PENETRATION FOLIAIRE A : | | |
|---|---|---|---|
| COMPOSITION | 06 HEURES | 24 HEURES | 72 HEURES |
| GLYPHOSATE + ETHOMEEN T/25 (1%) | 28% | 39% | 60% |
| GLYPHOSATE + huile de colza (6 OE) (1%) | 5% | 25% | 42% |
| GLYPHOSATE + huile de colza (10 OE) (1%) | 8% | 30% | 48% |
| GLYPHOSATE + huile de colza (20 OE) (1%) | 18% | 34% | 62% |
| GLYPHOSATE + huile de colza (30 OE) (1%) | 28% | 62% | 63% |
| GLYPHOSATE + huile de colza (40 OE) (1%) | 34% | 70% | 65% |

Les résultats de ce premier tableau, mettent en évidence la supériorité de l'huile de colza éthoxylée, ayant un indice d'OE supérieur ou égal à 20 et notamment à partir de 30, quant à la pénétration foliaire principe actif, par rapport à celles des additifs connus.

**Tableau 2**

| | PENETRATION FOLIAIRE A : | | |
|---|---|---|---|
| COMPOSITION | 06 HEURES | 24 HEURES | 72 HEURES |
| GLYPHOSATE + ETHOMEEN T/25 (1%) | 32% | 47% | 42% |
| GLYPHOSATE + Ester méthylique d'huile de colza (2 OE) (1%) | 18% | 32% | 30% |
| GLYPHOSATE + Ester méthylique d'huile de colza (3 OE) (1%) | 14% | 28% | 34% |
| GLYPHOSATE + Ester méthylique d'huile de colza (4 OE) (1%) | 14% | 34% | 25% |
| GLYPHOSATE + Ester méthylique d'huile de colza (6 OE) (1%) | 25% | 63% | 63% |
| GLYPHOSATE + Ester méthylique d'huile de colza (8 OE) (1%) | 41% | 60% | 73% |

Les résultats de ce deuxième tableau mettent en évidence la supériorité des esters méthyliques éthoxylés d'huile de colza ayant un indice d'OE supérieur ou égal à 6 et plus particulièrement supérieur ou égal à 8, quant à la pénétration foiaire du principe actif, par rapport à celles des additifs connus.

**Tableau 3**

| | PENETRATION FOLIAIRE A : | | |
|---|---|---|---|
| COMPOSITION | 06 HEURES | 24 HEURES | 72 HEURES |
| GLYPHOSATE + ETHOMEEN T/25 (1%) | 40% | 50% | 70% |
| GLYPHOSATE + ETHOMEEN T/25 (1%) + Ester méthylique d'huile de colza (8 OE) (1%) | 60% | 80% | 85% |
| GLYPHOSATE + ETHOMEEN T/25 (1%) + HUILE DE COLZA (40 OE) (1%) | 49% | 50% | 70% |
| GLYPHOSATE + Ester méthylique d'huile de colza (8 OE) (1%) | 46% | 50% | 74% |
| GLYPHOSATE + HUILE DE COLZA (40 OE) (1%) | 40% | 50% | 70% |

Les résultats de ce troisième tableau mettent en évidence l'intérêt qu'il y a, à associer une ou plusieurs huiles modifiées avec un principe actif hydrophile, pour un traitement phytosanitaire par absorption foliaire.

### B) Comparaison avec les formulations commerciales de glyphosate

On a constaté que la pénétration foliaire du sel d'isopropylamine du glyphosate avec de l'ester méthylique d'huile de colza (>8OE) était plus rapide que celle des produits commerciaux à base de glyphosate connus aujourd'hui, à savoir le Round up™, le Round up™ Bioforce, l'Ouragan™ ou le Sting™ST.

## Revendications

1. Procédé de traitement phytosanitaire par absorption foliaire, **caractérisé en ce qu'**il met en oeuvre une composition aqueuse comprenant au moins un principe actif phytosanitaire hydrosoluble et au moins une huile modifiée choisie parmi les esters méthylique, éthylique, propyliques, linéaire ou ramifié, ou butyliques, linéaire ou ramifiés, éthoxylés d'huiles, ayant un indice d'OE supérieur ou égal à 6 et inférieur ou égal à 20 et **caractérisé en ce que** le principe actif phytosanitaire, est un composé de structure chimique dérivée du radical : -C(=O)-CH₂-N-CH₂-P(=O) et plus particulièrement, le glyphosate ou N-(phosphonométhyl) glycine, sous forme de sel hydrosoluble, tel que par exemple les sels de monoisopropylamine ou de triméthylsulfonium.

2. Procédé tel que défini à la revendication 1, dans lequel la composition mise en oeuvre comprend au moins une ou plusieurs huiles modifiées d'origine végétale, choisie parmi les huiles modifiées de tournesol, de lin, de soja, de maïs, d'arachide, de coprah, d'olive, de palme, de palme hydrogénée ou de colza.

3. Procédé tel que défini à l'une des revendications 1 ou 2, dans lequel la composition mise en oeuvre comprend un mélange de plusieurs huiles modifiées et plus particulièrement un mélange d'une ou plusieurs huiles éthoxylées, avec un ou plusieurs esters éthoxylés d'huiles.

4. Procédé tel que défini à l'une des revendications 1 ou 2, dans lequel l'huile modifiée comprise dans la composition mise en oeuvre, est un ester méthylique éthoxylé d'huile ayant un indice d'OE supérieur ou égal à 8 et inférieur ou égal à 15.

5. Procédé tel que défini à l'une des revendications 1 à 4, dans lequel l'huile modifiée mise en oeuvre, est de l'huile de colza modifiée ou de l'huile de tournesol modifiée.

6. Composition comprenant au moins un principe actif phytosanitaire hydrosoluble, et au moins une huile végétaie modifiée, **caractérisée en ce que** ladite huile végétale modifiée est choisie parmi les esters méthylique, éthylique, propylique linéaire ou ramifié, ou butylique linéaire ou ramifié, éthoxylés d'huiles, ayant un indice d'OE supérieur ou égal à 6 et inférieur ou égal à 20 et **caractérisée en ce que** le principe actif phytosanitaire, est un composé de structure chimique dérivée du radical : -C(=O)-CH₂-N-CH₂-P(=O) et plus particulièrement, le glyphosate ou N-(phosphonométhyl) glycine, sous forme de sel hydrosoluble, tel que par exemple les sels de monoisopropylamine ou de triméthylsulfonium.

7. Composition, telle que définie à la revendication 6, dans laquelle l'huile modifiée d'origine végétale est choisie, parmi les huiles modifiées de tournesol, de lin, de soja, de maïs, d'arachide, de coprah, d'olive, de palme, de palme hydrogénée ou de colza.

8. Composition, telle que définie à l'une des revendications 6 ou 7, comprenant, une huile végétale alkoxylée et un ester alkylique alkoxylé d'huile végétale.

9. Composition telle que définie à l'une des revendications 6 à 8, dans laquelle l'huile modifiée mise en oeuvre, est un ester méthylique éthoxylé d'huile ayant un indice d'OE supérieur ou égal à 8 et inférieur ou égal à 15 et le principe actif phytosanitaire est le glyphosate sous forme de sel hydrosoluble.

10. Composition telle que définie à la revendication 9, dans laquelle l'huile modifiée mise en oeuvre, est de l'huile de colza modifiée ou de l'huile de tournesol modifiée.
